# EUROPEAN PATENT SPECIFICATION

(11) **EP 1 867 567 B1**
(45) Date of publication and mention of the grant of the patent: **08.12.2010**
(21) Application number: 07109963.4
(22) Date of filing: 11.06.2007
(51) Int. Cl.: B64C 25/42, B64C 25/44

(54) **Aircraft electric brake and generator therefor**
Elektrische Flugzeugbremse und Generator dafür
Frein électrique d'aéronef et générateur correspondant

(30) Priority: 12.06.2006 US 450582
(43) Date of publication of application: 19.12.2007
(73) Proprietor: Honeywell International Inc., Morristown, NJ 07960 (US)
(72) Inventor: Beehler, Jon T., Bremen, IN 46506 (US); Charles, David L., South Bend, IN 46614 (US); Kessinger, Roy Lee Jr., Greenville, IN 47124 (US); Dempster, John Brian, Floyds Knobs, IN 47119 (US)
(74) Representative: Buckley, Guy Julian

(56) References cited:
- FR-A- 859 585
- US-A- 5 744 896
- US-A1- 2004 154 880
- US-A1- 2005 224 642

## Description

The present invention is directed to an aircraft electric brake and a generator for powering the electric brake, and to a method of using same, and, more specifically, toward an aircraft electric brake powered by a generator having a generator rotor operably connectable to an aircraft wheel whereby rotation of the wheel rotates the generator rotor and produces power for the electric brake, and to a method of using the generator.

Aircraft brakes often include one or more rotors that rotate with an aircraft wheel and stators fixed with respect to aircraft landing gear which extend between the rotors. The rotors and stators are arranged in an alternating manner to form a brake disk stack and are normally spaced so that the aircraft wheel can rotate freely. When the disk stack is compressed, the rotors and stators are forced into contact which produces friction to slow and stop the wheel.

Various actuators are known for applying a pressure against a disk stack to compress the disk stack. While hydraulic actuators have been used, these are increasingly being replaced by electric actuators that receive power from an aircraft power system and that are controlled by electrical signals from an aircraft control system. Certain known electric actuators include an electric motor, a ram or piston that is moved by the motor toward and away from a disk stack, and a mechanical connection between the motor and the piston to convert the rotary motion of the motor into linear motion of the ram. A ballnut/ballscrew arrangement may be used for this mechanical connection, and the assembly of motor, mechanical connection and piston may be referred to as an electromechanical actuator or "EMA."

A motor controller receives braking commands from a higher level controller, such as the aircraft's main computer or a braking controller, and controls the current supplied to the motor to control the position of the piston and thus the amount of force applied by the piston against the brake stack. The design and control of electric brakes is discussed, for example, in U.S. 6,471,015 to Ralea.

US 2005/224642 discusses landing gear method and apparatus for braking and maneuvering and US 2004/154880 discusses an electromechanical brake comprising a stack of disks.

Under some circumstances, it may be desirable to operate electric brakes with a high-voltage power supply. However, for safety reasons, which may be the subject of government regulations, for example, it is not always possible or practical to run high-voltage power along a landing gear strut to the brakes. It would therefore be desirable to provide a brake arrangement and method of using same that allows for the provision of high voltage to an aircraft electric brake without running high-voltage cables along an aircraft landing gear strut.

This problem and others are addressed by the present invention, a first aspect of which is a n aircraft landing gear assembly having a braking system comprising: a brake disk stack comprising a plurality of brake rotors rotatable with an aircraft wheel and a plurality of brake stators projecting between pairs of adjacent rotors; an actuator for compressing the brake disk stack to slow the wheel; an actuator motor operably connected to the actuator for powering the actuator; a dual mode device having a device rotor and a device stator, said dual mode device, being operable in a first mode as a generator and in a second mode as a motor, the device rotor being operably connectable to an aircraft wheel such that the device rotor rotates when the wheel rotates to generate power for the actuator motor for powering the actuator,
characterised by: a controller electrically connected via a power line to said actuator motor and said dual mode device and directing current away from said dual mode device when said dual mode device operates in said first mode, said controller being controlled by a system controller, wherein the actuator motor is operably connected to the dual mode device such that said actuator motor is powered by said dual mode device when said dual mode device operates in said second mode; and said controller is located on the landing gear assembly such that said power line connecting said controller to said actuator motor is located near the aircraft wheel.

According to the present invention there is also provided a method of operating, in an aircraft landing gear assembly, an electric brake having an actuator motor, the method comprising the steps of: providing a dual mode device having a generator rotor and operably connecting the generator rotor to the aircraft wheel such that motion of the wheel turns the generator rotor to generate power for the actuator motor,
characterised by: electrically connecting an output of the dual mode device via a power line and a controller to the actuator motor to compress a brake disk stack to slow the aircraft wheel; and powering the actuator motor with energy produced by the dual mode device, wherein said controller is located on the landing gear assembly such that said power line connecting said controller to said actuator motor is located near the aircraft wheel.

These features and aspect of the invention and others will be better understood after a reading of the following detailed description together with the accompanying drawings, wherein,
Figure 1 schematically illustrates an aircraft brake system according to a first embodiment of the present invention;
Figure 2 is a schematic front elevational view of an aircraft brake system according to a second embodiment of the present invention;
Figure 3 is a schematic side elevational view, partly in section, of the aircraft brake system of Figure 2, and
Figure 4 is a schematic side elevational view, partly in section, of an aircraft brake system according to a third embodiment of the present invention.

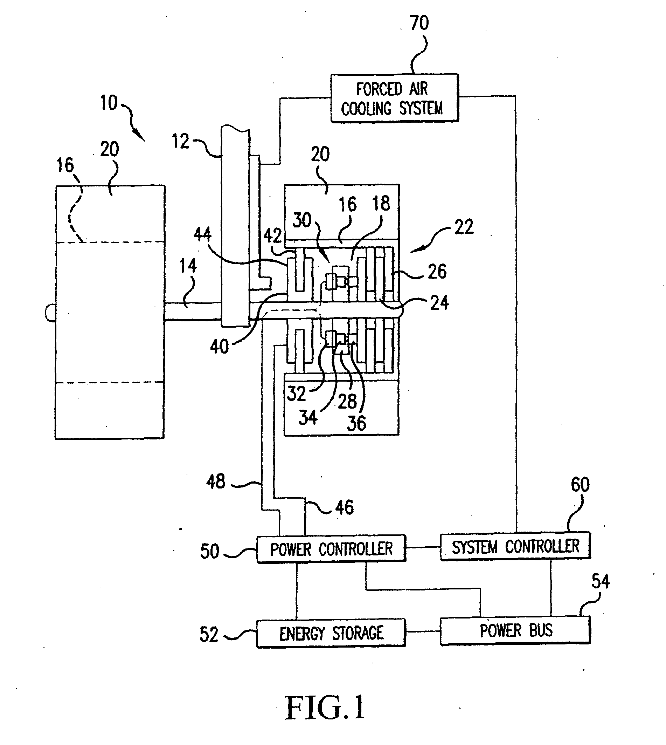

Referring now to the drawings, wherein the showings are for the purpose of illustrating preferred embodiments of the invention only and not for the purpose of limiting same, Figure 1 schematically illustrates an aircraft landing gear system 10 that includes a strut 12, and axle 14 connected to strut 12, first and second wheel 16 having interiors 18, mounted for rotation about axle 14, and first and second tires 20 mounted on wheels 16. A brake stack 22 is provided in one or each wheel interior 18 and includes a plurality of stators 24 fixed to axle 14 and a plurality of rotors 26 connected to wheel 16 for rotation therewith between pairs of stators 24. An actuator ring 28 is mounted on axle 14 and supports a plurality of electromechanical actuators 30, each of which comprises an electric motor 32, a ballnut/ballscrew assembly 34 and a piston 36.

A generator 40 is also mounted in wheel interior 18 and includes a generator rotor 42 connectable to wheel 16 for rotation therewith and a generator stator 44 connected to axle 14. Thus, as will be appreciated from Figure 1, the generator rotor 42 rotates relative to the generator stator 44 as wheel 16 rotates, and this causes generator 40 to produce a current on output line 46. While many pancake style axial gap generators could be used, one generator that has useful properties is a segmented electromagnetic array (SEMA) generator such as the one disclosed in U.S. 5,744,896 to Kessinger.

Output line 46 is connected to power controller 50. Power controller 50 may condition and output the AC current produced by generator 40 and/or may provide commutation to produce the direct current used by many aircraft systems. Beneficially, power controller may provide power to actuators 30 on power lines 48 so that the energy of an aircraft landing can be used to generate the power necessary for braking the aircraft.

Far more energy is produced by a typical landing than is needed to control the aircraft brakes. Therefore, power controller 50 also controls the charging and later discharging of a energy storage device 52. Energy storage device 52 may include one or more batteries; however, batteries may not charge rapidly enough to allow the capture of a substantial portion of the energy generated by an aircraft landing, which may last, for example, on the order of 30 seconds and produce approximately one megawatt of power per wheel. Therefore, energy storage device 52 alternately may comprise a bank of supercapacitors that charge more quickly than presently known batteries and that can absorb all or a substantial amount of the energy produced.

Energy stored in storage device 52 can later be used to provide power to aircraft power bus 54 for general use on an aircraft (not shown) or to actuators 30 when wheels 16 are no longer rotating rapidly enough to produce sufficient energy for controlling actuators 30, when the aircraft has nearly stopped or when the actuators 30 are used to perform a park brake function, for example. A connection to the aircraft power bus 54 provides redundancy and a source of electricity for actuators 30 in addition to the power produced by generator 40. System controller 60 controls power controller 50 and determines how the energy produced by generator 40 is directed and used.

Figure 1 also illustrates a forced air cooling system 70, which may also be under the control of system controller 60. Forced air cooling of generator 40 allows more efficient operation of the generator 40 and allows for the use of a smaller generator 40 that might be required if no forced air cooling was provided.

Beneficially, generator 40 will function as a motor if current is supplied to the generator 40 on line 46, and generator 40 may therefore sometimes be referred to herein as a dual mode device to emphasize that the device may operate as either a generator or a motor. A generator such as the one disclosed in U.S. 5,744,896, for example, will function as a motor without modification and is an example of such a dual-mode device. Because the generator rotor is coupled to wheel 16, wheel 16 can be caused to rotate by applying power to the dual mode device 40. Therefore, wheels 16 can be pre-rotated prior to landing so that the wheel speed will substantially match the aircraft ground speed at landing to reduce wear on tires 20. Additionally, dual mode device 40 can be used to rotate wheels 16 when the aircraft is on the ground and thus reduce or eliminate the use of aircraft engines for taxiing. Moreover, because system controller 60 can drive the wheels on opposite sides of an aircraft at different speeds, an aircraft can be steered using the main landing gear wheels and reduce or eliminate the need for a separate nose-wheel steering system.

In addition, in the foregoing embodiment, generator 40 is housed in the interior 18 of wheel 16 and power controller 50 may be located on the landing gear assembly as well. With this arrangement, power lines 46 and 48 do not need to run along strut 12 but instead can be kept at the distal end of strut 12 near wheels 16. Various regulations limit the use of high-voltage wiring on an aircraft strut; because power lines 46 and 48 do not run along strut 12, they can carry high voltage without violating these safety rules. This provides greater design flexibility in the design of actuators 30 which may now, if it is desirable, be operated with high voltage.

In operation, when landing gear is deployed prior to landing, power controller 50 sends current to dual mode device 40 to accelerate wheels 16 so that the tires 20 will be rotating at approximately the ground speed of the aircraft when it lands. Shortly before landing, power controller 50 will switch dual mode device 40 into generator mode to convert the forward momentum of the aircraft into usable energy. This energy is then provided to energy storage device 52 and to actuators 30 to compress the brake stack. It will be recognized that the magnetic interaction between the generator rotor and generator stator tends to resist rotation of the aircraft wheel, and therefore the generator itself will provide additional braking for the aircraft. Controller 50 may therefore beneficially take into account the amount of braking force that will be produced by a given generator and thereby reduce the amount of frictional braking force produced by the disk stack 22 so that the total braking force produced by generator action and friction will equal the braking force commanded by a pilot or system controller, with less wear to the consumable (and often expensive) brake rotors and brake stators. A system that uses only a generator for braking is disclosed in U.S. 2005/0224642 to Sullivan. Various operating methods disclosed in Sullivan may optionally be used in connection with the present invention as well.

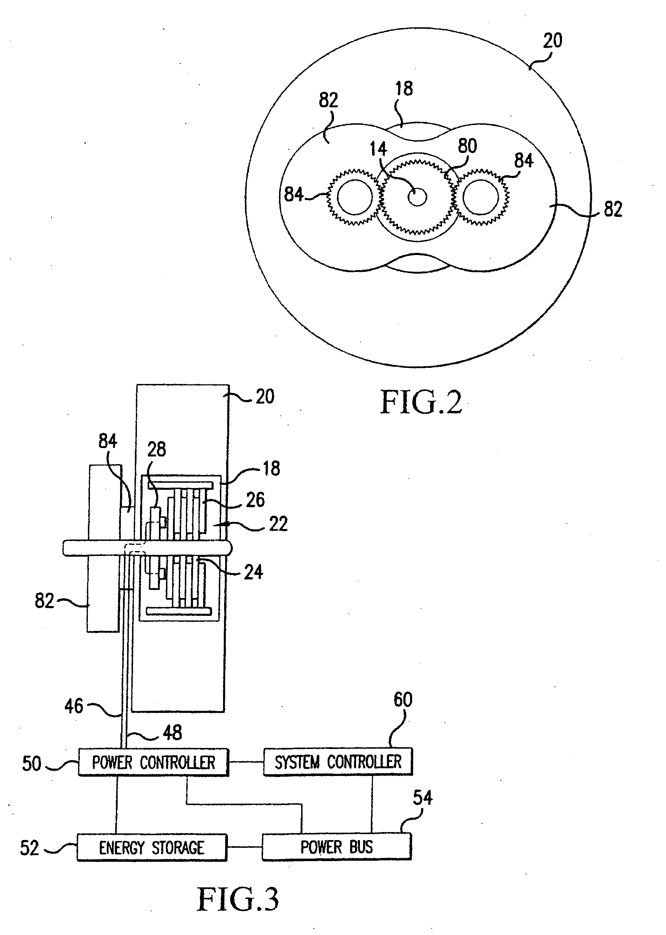

The forgoing embodiment may be useful on wheels and landing gear systems designed to accommodate generator 40 within a wheel interior. However, existing wheels may not be able to accommodate a generator as described above. Therefore, according to a second embodiment of the invention illustrated in Figures 2 and 3, one or more generators may be mounted outside wheel 16 and electrically connected to a brake actuator inside the wheel. In this embodiment, elements common to the first embodiment are identified with like reference numerals.

Referring to Figure 2, a tire 20 is illustrated mounted on a wheel 16 which rotates about the axis of axle 14. A gear 80 is connected to wheel 16 so as to rotate with the wheel, and first and second generators 82 are mounted adjacent wheel 16. Each generator 82 includes a generator gear 84 connected to a generator rotor (not shown), and the generator gears 84 are connected to wheel gear 80 so that the rotation of wheel 16 drives wheel gear 80 and first and second generators 82 to produce an electrical current. Wires 46 connect first and second generators 82 to power controller 50, and wires 48 connect power controller 50 to actuators 30 as in the first embodiment. Wheel 16 can be driven by operating generators 82 in a second mode, as motors, as discussed above in connection with the first embodiment. With this embodiment, two generators can be mounted with rotor axes of rotation offset from the axis of rotation of wheel 16 which provides additional design flexibility. A single generator could also be coaxially mounted with the wheel axis and mounted outside wheel 16 without exceeding the scope of this invention.

As noted above, this arrangement may be useful as a retro-fit for existing aircraft wheels that cannot accommodate a dual-mode device in their interiors. Alternately, this arrangement may be used on smaller aircraft wheels, such as nose wheels. Even if the nose wheels do not include a braking arrangement, the dual-mode device can be useful to generate power for use elsewhere in the aircraft and to operate as a motor and power the nose wheel to reduce or eliminate the need to use aircraft engines for taxiing.

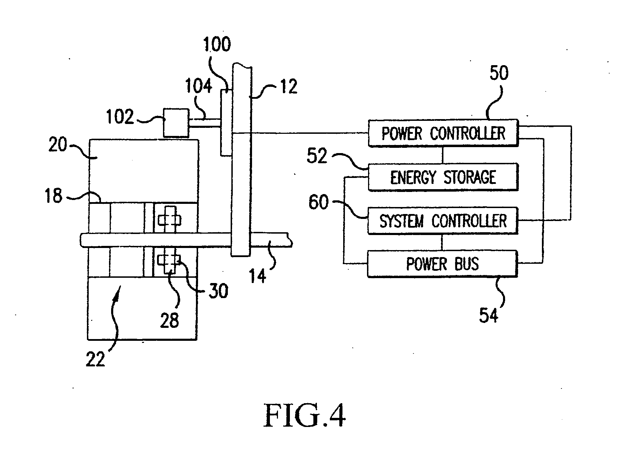

A third embodiment of the invention is illustrated in Figure 4. In this embodiment, a generator 100 is mounted adjacent to the a wheel, for example on an aircraft strut 12. A friction wheel 102 engages tire 20 and is connected by rod 104 to a rotor (not shown) of generator 100. This arrangement avoids the need to connect a generator directly to a wheel and a simple frictional connection with a tire provides similar benefits to those discussed above. The generator 100 is connected to a power controller 50 and other system elements in the same manner discussed above in connection with the first and second embodiments.

The present invention has been described herein in terms of several preferred embodiments. Obvious additions to and modifications of these embodiments will become apparent to those of ordinary skill in the art upon a reading of the foregoing description, and it is intended that all such obvious additions and modifications form a part of the present invention to the extent that they fall within the scope of the several claims appended hereto.

## Claims

1. An aircraft landing gear assembly having a braking system comprising:
a brake disk stack (22) comprising a plurality of brake rotors (26) rotatable with an aircraft wheel (16) and a plurality of brake stators (24) projecting between pairs of adjacent rotors (26);
an actuator (36) for compressing the brake disk stack (22) to slow the wheel (16);
an actuator motor (32) operably connected to the actuator (36) for powering the actuator (36);
a dual mode device (40, 82, 100) having a device rotor (42) and a device stator (44), said dual mode device (40, 82, 100) being operable in a first mode as a generator and in a second mode as a motor, the device rotor (42) being operably connectable to an aircraft wheel (16) such that the device rotor (42) rotates when the wheel (16) rotates to generate power for the actuator motor (32) for powering the actuator (36),
**characterised by**:
a controller (50) electrically connected via a power line (46, 48) to said actuator motor (32) and said dual mode device (40, 82, 100) and directing current away from said dual mode device (40, 82, 100) when said dual mode device (40, 82, 100) operates in said first mode, said controller (50) being controlled by a system controller (60),
wherein the actuator motor (32) is operably connected to the dual mode device (40, 82, 100) such that said actuator motor (32) is powered by said dual mode device (40, 82, 100) when said dual mode device (40, 82, 100) operates in said second mode; and
said controller (50) is located on the landing gear assembly such that said power line (46) connecting said controller (50) to said actuator motor (32) is located near the aircraft wheel (16).

2. The aircraft landing gear assembly of claim 1, wherein an energy storage device (52) is electrically connected to said dual mode device (40, 82, 100) and to said actuator motor (32), said controller (50) directing current from said dual mode device (40, 82, 100) to said energy storage device (52) when said dual mode device (40, 82, 100) operates in said first mode and said controller (50) directing current from said energy storage device (52) to said dual mode device (40, 82, 100) when said dual mode device (40, 82, 100) operates in said second mode.

3. The aircraft landing gear assembly of claim 1, wherein said dual mode device (40, 82, 100) comprises a segmented electro-magnetic array device.

4. The aircraft landing gear assembly of claim 1, wherein said energy storage device (52) comprises a battery or a supercapacitor.

5. The aircraft landing gear assembly of claim 1 wherein said dual mode device (40, 82, 100) has a first axis of rotation and said generator rotor (42) has a second axis of rotation offset from said first axis of rotation.

6. The aircraft landing gear assembly of claim 1, including at least one gear (80) connecting the aircraft wheel (16) to the generator rotor (42) and a second dual mode device (84) operatively connected to said at least one gear (80).

7. The aircraft landing gear assembly of claim 6, wherein said first dual mode device (82) and said second dual mode device (84) are both operably connected to a given one of said at least one gear (80).

8. A method of operating, in an aircraft landing gear assembly, an electric brake having an actuator motor (32), the method comprising the steps of:
providing a dual mode device (40, 82, 100) having a generator rotor (42); and
operably connecting the generator rotor (42) to the aircraft wheel (16) such that motion of the wheel (16) turns the generator rotor (42) to generate power for the actuator motor (32),
**characterised by**:
electrically connecting an output of the dual mode device (40, 82, 100) via a power line (46, 48) and a controller (50) to the actuator motor (32) to compress a brake disk stack (22) to slow the aircraft wheel (16); and
powering the actuator motor (32) with energy produced by the dual mode device (40, 82,100), wherein
said controller (50) is located on the landing gear assembly such that said power line (46) connecting said controller (50) to said actuator motor (32) is located near the aircraft wheel (16).

9. The method of claim 8, including the additional steps of:
operably connecting an energy storage device (52) to the dual mode device (40, 82, 100); and
charging the energy storage device (52) with the dual mode device (40, 82, 100).

10. The method of claim 9, including the additional step of supplying current from the energy storage device (52) to the dual mode device (40, 82, 100) to cause the dual mode device (40, 82, 100) to function as a motor and drive the aircraft wheel (16).

## Patentansprüche

1. Flugzeugfahrwerkbaugruppe mit einem Bremssystem, umfassend:
einen Bremsscheibenstapel (22), der mehrere Bremsrotoren (26) umfasst, die sich mit einem Flugzeugrad (16) drehen können, und mehreren Bremsstatoren (24), die zwischen Paaren von benachbarten Rotoren (26) vorstehen;
einen Aktuator (36) zum Zusammendrücken des Bremsscheibenstapels (22), um das Rad (16) zu verlangsamen;
einen Aktuatormotor (32), der operativ mit dem Aktuator (36) verbunden ist, um den Aktuator (36) zu bestromen;
eine Doppelmoduseinrichtung (40, 82, 100) mit einem Einrichtungsrotor (42) und einem Einrichtungsstator (44), wobei die Doppelmoduseinrichtung (40, 82, 100) in einem ersten Modus als Generator und in einem zweiten Modus als Motor betrieben werden kann, wobei der Einrichtungsrotor (42) operativ mit einem Flugzeugrad (16) verbunden werden kann, so dass sich der Einrichtungsrotor (42) dreht, wenn sich das Rad (16) dreht, um Strom für den Aktuatormotor (32) zum Bestromen des Aktuators (36) zu generieren,
**gekennzeichnet durch**:
einen Controller (50), der elektrisch über eine Stromleitung (46, 48) mit dem Aktuatormotor (32) und der Doppelmoduseinrichtung (40, 82, 100) verbunden ist und Strom weg von der Doppelmoduseinrichtung (40, 82, 100) lenkt, wenn die Doppelmoduseinrichtung (40, 82, 100) in dem ersten Modus arbeitet, wobei der Controller (50) von einem Systemcontroller (60) gesteuert wird,
wobei der Aktuatormotor (32) operativ mit der Doppelmoduseinrichtung (40, 82, 100) verbunden ist, so dass der Aktuatormotor (32) von der Doppelmoduseinrichtung (40, 82, 100) bestromt wird, wenn die Doppelmoduseinrichtung (40, 82, 100) in dem zweiten Modus arbeitet; und
der Controller (50) derart an der Fahrwerksbaugruppe angeordnet ist, dass sich die den Controller (50) mit dem Aktuatormotor (32) verbindende Stromleitung (46) nahe dem Flugzeugrad (16) befindet.

2. Flugzeugfahrwerkbaugruppe nach Anspruch 1, wobei eine Energiespeicherungseinrichtung (52) elektrisch mit der Doppelmoduseinrichtung (40, 82, 100) und dem Aktuatormotor (32) verbunden ist, wobei der Controller (50) Strom von der Doppelmoduseinrichtung (40, 82, 100) zu der Energiespeicherungseinrichtung (52) lenkt, wenn die Doppelmoduseinrichtung (40, 82, 100) in dem ersten Modus arbeitet und der Controller (50) Strom von der Energiespeicherungseinrichtung (52) zu der Doppelmoduseinrichtung (40, 82, 100) lenkt, wenn die Doppelmoduseinrichtung (40, 82, 100) in dem zweiten Modus arbeitet.

3. Flugzeugfahrwerkbaugruppe nach Anspruch 1, wobei die Doppelmoduseinrichtung (40, 82, 100) eine segmentierte elektromagnetische Arrayeinrichtung umfasst.

4. Flugzeugfahrwerkbaugruppe nach Anspruch 1, wobei die Energiespeicherungseinrichtung (52) eine Batterie oder einen Superkondensator umfasst.

5. Flugzeugfahrwerkbaugruppe nach Anspruch 1, wobei die Doppelmoduseinrichtung (40, 82, 100) eine erste Rotationsachse aufweist und der Generatorrotor (42) eine von der ersten Rotationsachse versetzte zweite Rotationsachse aufweist.

6. Flugzeugfahrwerkbaugruppe nach Anspruch 1, mit mindestens einem Zahnrad (80), das das Flugzeugrad (16) mit dem Generatorrotor (42) verbindet, und einer zweiten Doppelmoduseinrichtung (84), die operativ mit dem mindestens einen Zahnrad (80) verbunden ist.

7. Flugzeugfahrwerkbaugruppe nach Anspruch 6, wobei die erste Doppelmoduseinrichtung (82) und die zweite Doppelmoduseinrichtung (84) beide operativ mit einem gegebenen des mindestens einen Zahnrads (80) verbunden sind.

8. Verfahren zum Betreiben einer elektrischen Bremse mit einem Aktuatormotor (32) in einer Flugzeugfahrwerkbaugruppe, wobei das Verfahren die folgenden Schritte umfasst:
Bereitstellen einer Doppelmoduseinrichtung (40, 82, 100) mit einem Generatorrotor (42) und operatives Verbinden des Generatorrotors (42) mit dem Flugzeugrad (16), so dass die Bewegung des Rades (16) den Generatorrotor (42) dreht, um Strom für den Aktuatormotor (32) zu generieren,
**gekennzeichnet durch**:
elektrisches Verbinden eines Ausgangs der Doppelmoduseinrichtung (40, 82, 100) über eine Stromleitung (46, 48) und einen Controller (50) mit dem Aktuatormotor (32), um einen Bremsscheibenstapel (22) zusammenzudrücken, um das Flugzeugrad (16) zu verlangsamen; und
Bestromen des Aktuatormotors (32) mit von der Doppelmoduseinrichtung (40, 82, 100) erzeugter Energie, wobei
der Controller (50) an der Fahrwerkbaugruppe angeordnet ist, so dass sich die den Controller (50) mit dem Aktuatormotor (32) verbindende Stromleitung (46) nahe dem Flugzeugrad (16) befindet.

9. Verfahren nach Anspruch 8, mit den zusätzlichen Schritten:
operatives Verbinden einer Energiespeicherungseinrichtung (52) mit der Doppelmoduseinrichtung (40, 82, 100) und
Laden der Energiespeicherungseinrichtung (52) mit der Doppelmoduseinrichtung (40, 82, 100).

10. Verfahren nach Anspruch 9, mit dem zusätzlichen Schritt des Lieferns von Strom von der Energiespeicherungseinrichtung (52) an die Doppelmoduseinrichtung (40, 82, 100), um zu bewirken, dass die Doppelmoduseinrichtung (40, 82, 100) als ein Motor fungiert und das Flugzeugrad (16) antreibt.

## Revendications

1. Ensemble train d'atterrissage d'aéronef possédant un système de freinage, comprenant :
un empilement de disques de frein (22) comprenant une pluralité de rotors de frein (26) solidaires en rotation d'une roue (16) d'aéronef et une pluralité de stators de frein (24) en saillie entre des paires de rotors (26) adjacents ;
un actionneur (36) conçu pour comprimer l'empilement de disques de frein (22) afin de ralentir la roue (16) ;
un moteur (32) d'actionneur relié fonctionnellement à l'actionneur (36) pour entraîner l'actionneur (36) ;
un dispositif bimode (40, 82, 100) possédant un rotor (42) de dispositif et un stator (44) de dispositif, ledit dispositif bimode (40, 82, 100) étant apte à fonctionner dans un premier mode en tant que générateur et dans un deuxième mode en tant que moteur, le rotor (42) de dispositif étant apte à être relié fonctionnellement à une roue (16) d'aéronef de façon à ce que la rotation de la roue (16) provoque la rotation du rotor (42) de dispositif pour générer du courant permettant au moteur (32) d'actionneur d'entraîner l'actionneur (36),
**caractérisé par** :
un module de commande (50) relié électriquement par une ligne électrique (46, 48) audit moteur (32) d'actionneur et audit dispositif bimode (40, 82, 100) et déviant le courant dudit dispositif bimode (40, 82, 100) lorsque ledit dispositif bimode (40, 82, 100) fonctionne dans ledit premier mode, ledit module de commande (50) étant commandé par un module de commande système (60),
le moteur (32) d'actionneur étant relié fonctionnellement au dispositif bimode (40, 82, 100) de façon à ce que ledit moteur (32) d'actionneur soit entraîné par ledit dispositif bimode (40, 82, 100) lorsque ledit dispositif bimode (40, 82, 100) fonctionne dans ledit deuxième mode ; et
ledit module de commande (50) étant placé sur l'ensemble train d'atterrissage de façon à ce que ladite ligne électrique (46) reliant ledit module de commande (50) audit moteur (32) d'actionneur soit placée à proximité de la roue (16) d'aéronef.

2. Ensemble train d'atterrissage d'aéronef selon la revendication 1, un dispositif accumulateur d'énergie (52) étant relié électriquement audit dispositif bimode (40, 82, 100) et audit moteur (32) d'actionneur, ledit module de commande (50) déviant le courant dudit dispositif bimode (40, 82, 100) vers ledit dispositif accumulateur d'énergie (52) lorsque ledit dispositif bimode (40, 82, 100) fonctionne dans ledit premier mode, et ledit module de commande (50) déviant le courant dudit dispositif accumulateur d'énergie (52) vers ledit dispositif bimode (40, 82, 100) lorsque ledit dispositif bimode (40, 82, 100) fonctionne dans ledit deuxième mode.

3. Ensemble train d'atterrissage d'aéronef selon la revendication 1, ledit dispositif bimode (40, 82, 100) comprenant un dispositif à réseau électromagnétique segmenté.

4. Ensemble train d'atterrissage d'aéronef selon la revendication 1, ledit dispositif accumulateur d'énergie (52) comprenant une batterie ou un supercondensateur.

5. Ensemble train d'atterrissage d'aéronef selon la revendication 1, ledit dispositif bimode (40, 82, 100) possédant un premier axe de rotation et ledit rotor (42) de dispositif possédant un deuxième axe de rotation décalé par rapport audit premier axe de rotation.

6. Ensemble train d'atterrissage d'aéronef selon la revendication 1, comportant au moins un engrenage (80) reliant la roue (16) d'aéronef au rotor (42) de dispositif et un deuxième dispositif bimode (84) relié fonctionnellement audit au moins un engrenage (80).

7. Ensemble train d'atterrissage d'aéronef selon la revendication 6, ledit premier dispositif bimode (82) et ledit deuxième dispositif bimode (84) étant tous deux reliés fonctionnellement à un engrenage donné dudit au moins un engrenage (80).

8. Procédé de mise en fonctionnement, dans un ensemble train d'atterrissage d'aéronef, d'un frein électrique possédant un moteur (32) d'actionneur, le procédé comprenant les étapes consistant à :
procurer un dispositif bimode (40, 82, 100) possédant un rotor (42) de dispositif ; et
relier fonctionnellement le rotor (42) de dispositif à une roue (16) d'aéronef de façon à ce que le mouvement de la roue (16) entraîne en rotation le rotor (42) de dispositif pour générer du courant pour le moteur (32) d'actionneur,
**caractérisé en ce qu'**il comprend en outre les étapes consistant à :
relier électriquement une sortie du dispositif bimode (40, 82, 100) par une ligne électrique (46, 48) et un module de commande (50) au moteur (32) d'actionneur pour comprimer un empilement de disques de frein (22) afin de ralentir la roue (16) d'aéronef ; et
entraîner le moteur (32) d'actionneur grâce à l'énergie produite par le dispositif bimode (40, 82, 100),
ledit module de commande (50) étant placé sur l'ensemble train d'atterrissage de façon à ce que ladite ligne électrique (46) reliant ledit module de commande (50) audit moteur (32) d'actionneur soit placée à proximité de la roue (16) d'aéronef.

9. Procédé selon la revendication 8, comportant les étapes supplémentaires consistant à :
relier fonctionnellement un dispositif accumulateur d'énergie (52) au dispositif bimode (40, 82, 100) ; et
charger le dispositif accumulateur d'énergie (52) au moyen du dispositif bimode (40, 82, 100).

10. Procédé selon la revendication 9, comportant l'étape supplémentaire consistant à fournir un courant du dispositif accumulateur d'énergie (52) au dispositif bimode (40, 82, 100) pour faire fonctionner le dispositif bimode (40, 82, 100) en tant que moteur et entraîner la roue (16) d'aéronef.
